# EUROPÄISCHE PATENTANMELDUNG

(11) **EP 1 522 696 A2**
(43) Veröffentlichungstag der Anmeldung: **13.04.2005**
(21) Anmeldenummer: 04104153.4
(22) Anmeldetag: 31.08.2004
(51) Int. Cl.: F02C 3/30

(54) **Gasturbinenaxialkompressor mit Wassereinspritzung**

(30) Priorität: 10.09.2003 DE 10342097
(71) Anmelder: Alstom Technology Ltd, 5400 Baden (CH)
(72) Erfinder: Bühler, Sven, 8008, Zürich (CH); Matz, Charles, Raymond, 5432, Neuenhof (CH)

(57) **Zusammenfassung**

Bei einem Axialkompressor (10), insbesondere für eine Gasturbine, mit einer Mehrzahl von Stufen (ST1,..,ST5), welche zwischen einem Kompressoreingang (14) und einem Kompressorausgang (15) hintereinander angeordnet sind und jeweils wenigstens einen Kranz von Rotorschaufeln (R) und einen Kranz von Statorschaufeln (S) umfassen, wird eine wesentliche Verbesserung dadurch erreicht, dass zur Minimierung der Verluste in den einzelnen Stufen (ST1,..,ST5) bei einem Betrieb des Axialkompressors (10), bei dem Wasser in den Kompressoreingang (14) eingespritzt wird, welches auf dem Weg durch den Kompressor (10) verdampft (sog. "Nasskompression"), die durch das eingespritzte Wasser bedingten Veränderungen in den Strömungsgeschwindigkeiten (c1, cm1, w1) des durch den Kompressor (10) strömenden Mediums durch eine gezielte Änderung der Geometrie der Schaufeln (R, S) weitgehend kompensiert werden.

## Beschreibung

### TECHNISCHES GEBIET

Die vorliegende Erfindung bezieht sich auf das Gebiet Gasturbinen. Sie betrifft einen Axialkompressor gemäss dem Oberbegriff des Anspruchs 1.

### STAND DER TECHNIK

Das Einspritzen von Wasser in den Kompressor einer Gasturbine ist seit längerem als Mittel zur Erhöhung der Ausgangsleistung der Gasturbinenanlage bekannt (siehe z.B. die US-A-5,867,977 oder die WO-A1-03/048544 der Anmelderin). Es ist andererseits aber auch richtig, dass der aerodynamische Wirkungsgrad der Kompressorstufen beim Betrieb mit Wassereinspritzung nicht optimal ist. Das bedeutet, dass Fehlanpassungseffekte im Bezug auf das Auftreffen der Strömung auf die Schaufeln auftreten, die umso bedeutsamer werden, je mehr Wasser in den Kompressor eingespritzt wird. Derzeit wird bereits über Einspritzmengen von bis zu 2% des angesaugten Massenstroms an trockener Luft nachgedacht, in Zukunft werden die eingespritzten Mengen vielleicht sogar noch grösser.

Die Fehlanpassung der für trockenen Betrieb optimierten Schaufeln an die sich mit dem Einspritzen von Wasser ändernden Anströmungsbedingungen innerhalb der Kompressorstufen führt zu erhöhten Verlusten in den Stufen, die den Wirkungsgrad der Anlage herabsetzen.

### DARSTELLUNG DER ERFINDUNG

Es ist Aufgabe der Erfindung, einen Axialkompressor anzugeben, der auf einfache Weise so ausgebildet ist, dass die eingangs genannten Fehlanpassungen und deren Folgen vermieden werden und die Vorteile der Wassereinspritzung für die Leistungserzeugung voll ausgenutzt werden können.

Die Aufgabe wird durch die Gesamtheit der Merkmale des Anspruchs 1 gelöst. Der Kern der Erfindung besteht darin, die durch das eingespritzte Wasser bedingten Veränderungen in den Strömungsgeschwindigkeiten des durch den Kompressor strömenden Mediums durch eine gezielte Änderung der Geometrie der Schaufeln weitgehend zu kompensieren. Durch diese Geometrieänderung ist es möglich, trotzt der Wassereinspritzung im optimalen Bereich der Kurve zu bleiben, welche die Abhängigkeit des Verlustes in einer Kompressorstufe vom Winkel der relativen Strömungsgeschwindigkeit des in die Stufe einströmenden Mediums beschreibt.

Das in den Kompressor eingangsseitig eingespritzte Wasser wirkt sich auf die einzelnen Stufen des Kompressors wegen der im Kompressor sukzessive stattfindenden Verdampfung unterschiedlich aus. Entsprechend müssen auch unterschiedliche Anpassungen der Kompressorstufen vorgenommen werden. Eine bevorzugte Ausgestaltung der Erfindung zeichnet sich daher dadurch aus, dass bei den Stufen, in denen die axiale Strömungsgeschwindigkeit des Mediums durch das Einspritzen des Wassers zunimmt, die Nasen der Schaufeln zu einer offeneren Position hin verändert sind, und dass bei den Stufen, in denen die axiale Strömungsgeschwindigkeit des Mediums durch das Einspritzen des Wassers abnimmt, die Nasen der Schaufeln zu einer geschlosseneren Position hin verändert sind.

Insbesondere ist es so, dass, wenn der Axialkompressor eine mittlere Stufe umfasst, in welcher das Einspritzen von Wasser die axiale Strömungsgeschwindigkeit nur unwesentlich beeinflusst, bei den in Strömungsrichtung vor der mittleren Stufe angeordneten Stufen die Nasen der Schaufeln zu einer offeneren Position hin verändert sind, und dass bei den in Strömungsrichtung nach der mittleren Stufe angeordneten Stufen die Nasen der Schaufeln zu einer geschlosseneren Position hin verändert sind.

Bei einer Einspritzung von Wasser in der Grössenordnung von 2% des trockenen Luftmassenstromes am Kompressoreingang wird die Geometrie der in Strömungsrichtung vor der mittleren Stufe angeordneten Stufen so verändert, dass sich der Winkel der relativen Strömungsgeschwindigkeit des in die Stufe einströmenden Mediums jeweils um etwa 2° erhöht, und dass die Geometrie der in Strömungsrichtung hinter der mittleren Stufe angeordneten Stufen so verändert wird, dass sich der Winkel der relativen Strömungsgeschwindigkeit des in die Stufe einströmenden Mediums jeweils um etwa 2,5° erniedrigt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Diagramm eines Geschwindigkeitsdreiecks für eine im vorderen Teil des Kompressors angeordnete Stufe für den trockenen Betrieb und den Betrieb mit Wassereinspritzung;
- Fig. 2: das Diagramm eines Geschwindigkeitsdreiecks für eine im hinteren Teil des Kompressors angeordnete Stufe für den trockenen Betrieb und den Betrieb mit Wassereinspritzung
- Fig. 3: die Änderung im Gitterverlust mit zunehmender Wassereinspritzung bei herkömmlicher Schaufelgeometrie und bei gemäss der Erfindung veränderter Schaufelgeometrie für eine im vorderen Teil des Kompressors angeordnete Stufe;
- Fig. 4: die Änderung im Gitterverlust mit zunehmender Wassereinspritzung bei herkömmlicher Schaufelgeometrie und bei gemäss der Erfindung veränderter Schaufelgeometrie für eine im hinteren Teil des Kompressors angeordnete Stufe;
- Fig. 5: die Konstanz des Gitterverlustes bei sich ändernder Wassereinspritzung für eine mittlere Stufe des Kompressors mit herkömmlicher Schaufelgeometrie;
- Fig. 6: den schematisierten Aufbau eines mehrstufigen Axialkompressors, der Gegenstand der vorliegenden Erfindung ist.

### WEGE ZUR AUSFÜHRUNG DER ERFINDUNG

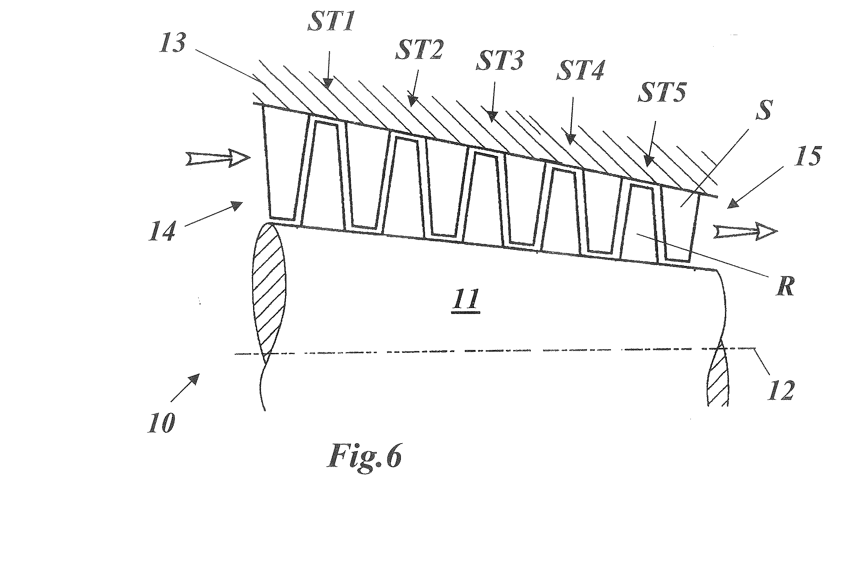

Die Erfindung geht aus von einem Axialkompressor 10, wie er schematisch in Fig. 6 wiedergegeben ist. Der Axialkompressor 10 hat einen Rotor 11, der konzentrisch in einem Stator 13 um eine Rotorachse 12 drehbar angeordnet ist. Der Axialkompressor 10 hat eine Mehrzahl von Kompressorstufen ST1,..,ST5, die zwischen einem Kompressoreingang 14 und einem Kompressorausgang 15 in axialer Richtung hintereinander angeordnet sind. Die Stufen ST1,..,ST5 umfassen jeweils einen Kranz von Rotorschaufeln oder Laufschaufeln R und einen Kranz von Statorschaufeln oder Leitschaufeln S. Durch den Axialkompressor strömt vom Kompressoreingang 14 zum Kompressorausgang 15 ein Medium, insbesondere Luft, das komprimiert wird. Ist der Kompressor Teil einer Gasturbine, dient die komprimierte Luft als Verbrennungsluft im Brenner der Gasturbine.

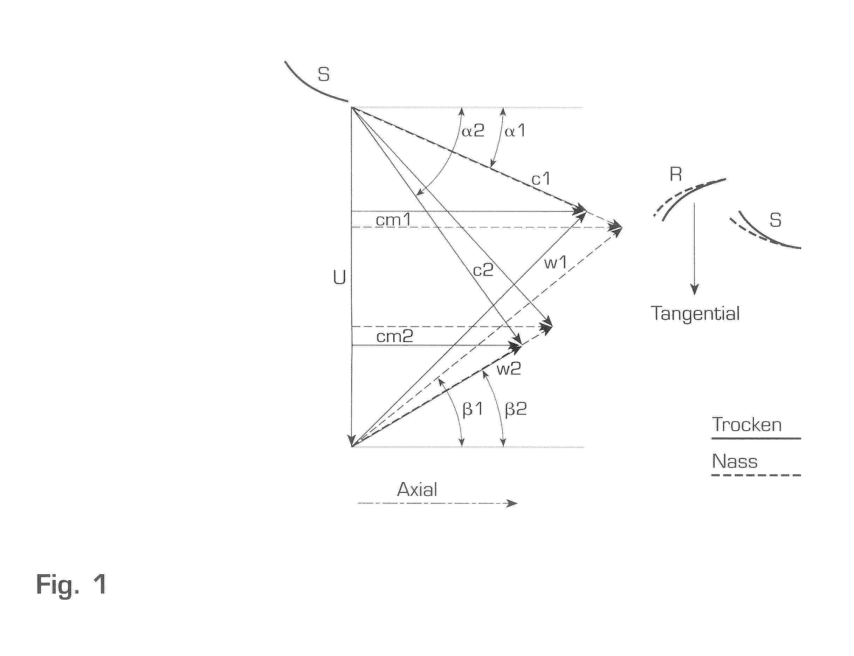

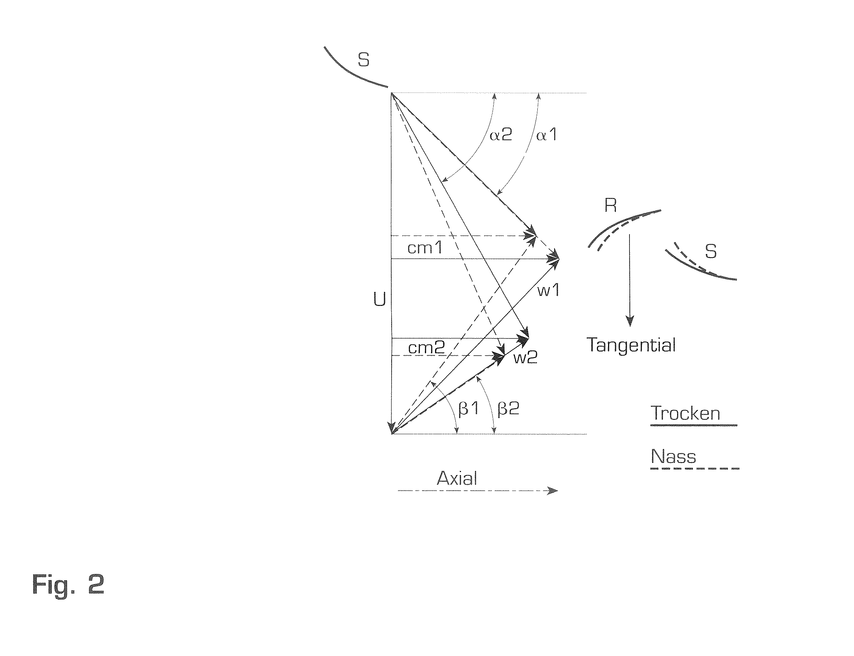

Wie aus der Darstellung der Rotorschaufeln R und Statorschaufeln S in den Fig. 1 und 2 zu erkennen ist, prägen die rotierenden Rotorschaufeln R dem durch den Kompressor strömenden Medium eine Strömungsgeschwindigkeit auf. Die Statorschaufeln S bewirken eine nachfolgende Umlenkung, bevor das zu komprimierende Medium in die nächste Stufe eintritt. Die Rotorschaufeln R haben eine lineare Rotorgeschwindigkeit U. Die absoluten Strömungsgeschwindigkeiten des Mediums am Eingang und am Ausgang der Stufe sind c1 bzw. c2. Sie schliessen mit der axialen Richtung einen Winkel α1 bzw. α2 ein. Die relativen Strömungsgeschwindigkeiten des Mediums im Bezug auf die Rotorschaufeln R am Eingang und am Ausgang der Stufe sind w1 bzw. w2. Sie schliessen mit der axialen Richtung einen Winkel von β1 bzw. β2 ein. Die Komponenten der absoluten Strömungsgeschwindigkeiten c1 bzw. c2 in axialer Richtung sind mit cm1 und cm2 bezeichnet. Verglichen sind in den Fig. 1 und 2 jeweils der Fall ohne Wassereinspritzung ("Trocken"; durchgezogenen Linien) und mit Wassereinspritzung ("Nass"; punktierte Linien). Die verschiedenen Strömungsgeschwindigkeiten U, c und w bilden dabei ein charakteristisches Geschwindigkeitsdreieck. Der in Fig. 1 dargestellte Fall gilt für die im vorderen Bereich des Kompressors angeordneten Stufen; der in Fig. 2 dargestellte Fall für die im hinteren Bereich angeordneten Stufen.

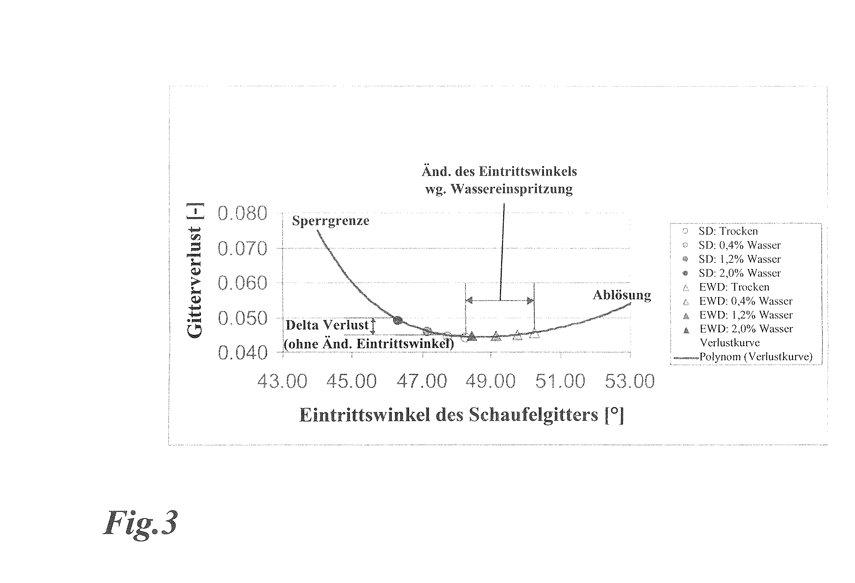

Gemäss Fig. 1 führt die Verdampfung des eingespritzten Wassers in den vorderen Stufen zu einem Ansteigen der axialen Strömungsgeschwindigkeit cm1 bzw. cm2 (Übergang vom durchgezogenen Vektor zum punktiert gezeichneten Vektor). Damit verbunden ist eine Änderung (Verkleinerung) des Winkels β1. Auf der in Fig. 3 dargestellten zugehörigen Kurve der Gitterverluste in Abhängigkeit vom Eintrittswinkel des Schaufelgitters (die Kreise gelten für SD = Standard-Design; die Dreiecke gelten für EWD = Design mit Eintrittswinkeländerung) wandern die zugehörigen Punkte (Kreise) bei Verkleinerung des Winkels nach links zur "Sperrgrenzen"-Seite der Kurve und führen zu erhöhten Verlusten ("Delta Verlust") in der Stufe. Um die mit dieser Winkeländerung verbundenen Verluste zu vermeiden, werden die Rotorschaufeln R nun in ihrer Geometrie so verändert, dass sie bezüglich der relativen Strömungsgeschwindigkeit von vornherein einen zusätzlichen Winkelbetrag aufweisen. Damit liegt der Ausgangspunkt für den Betrieb ohne Wassereinspritzung nicht mehr im absoluten Minimum der Verlustkurve der Fig. 3. Die zu einem bestimmten Prozentsatz an Wassereinspritzung gehörenden Punkte auf der Verlustkurve verschieben sich nach rechts; die Kreise gehen in zugeordnete Dreiecke über, die jeweils einem um etwa 2° höheren Winkel entsprechen. Wird nun zunehmend Wasser in den Kompressor eingespritzt, erreichen die Dreiecke bei einer Wassereinspritzung von etwa 2% des angesaugten trockenen Luftmassenstroms den Minimalwert der Verlustkurve, sodass sich durch die Wassereinspritzung der Verlust nicht erhöht, sondern minimiert. Die voreingestellte Winkelerhöhung wird gemäss Fig. 1 dadurch erreicht, dass die Nasen der Rotorschaufeln R und nachfolgenden Statorschaufeln S im Sinne einer stärkeren Öffnung verändert werden (punktierte Linien der Schaufeln R und S in Fig. 1).

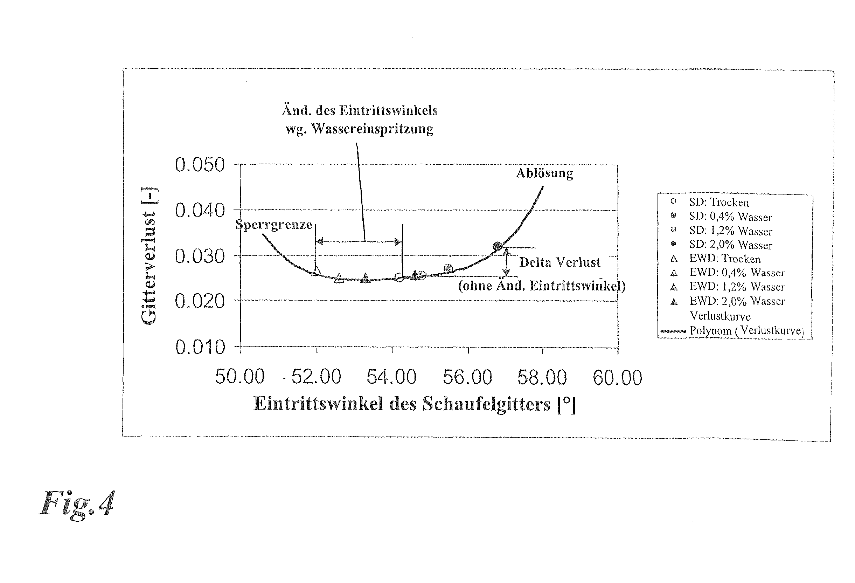

Bei den im hinteren Bereich angeordneten Stufen des Kompressors 10 sind die Verhältnisse genau anders herum ausgebildet (Fig. 2 und 4): Die erhöhte Dichte des strömenden Mediums, die eine Folge der Abkühlung durch das verdampfende Wasser ist, führt zu einer Abnahme der axialen Strömungsgeschwindigkeit cm1 bzw. cm2 im Vergleich zum Betriebe ohne Wassereinspritzung. Die zugehörigen Arbeitspunkte (Kreise) auf der Verlustkurve der Fig. 4 wandern dadurch nach rechts zur "Ablösungs"-Seite der Kurve und verursachen so höhere Verluste. Durch eine Voreinstellung in Form eines verminderten Winkels (Übergang von den Kreisen nach links zu den Dreiecken in Fig. 4) kann auch hier ein mit der Wassereinspritzung zunehmender Verlust verhindert werden. Die Nasen der Schaufeln R und S werden gemäss den punktierten Kurven in Fig. 2 hin zu einer stärker geschlossenen Geometrie verändert. Voreinstellung zur "Sperrgrenzen"-Seite hin).

Wie man an den Fig. 3 und 4 leicht erkennt, wird durch die Geometrieveränderung der Schaufeln der flache Minimalbereich der Verlustkurven voll ausgenutzt. Der Winkel der relativen Strömungsgeschwindigkeit wird dazu so verschoben, dass sich der Arbeitspunkt für den gesamten Bereich der Wassereinspritzung bis hinauf zu 2% praktisch im breiten Minimalbereich der Kurve bewegt. Der positive Gesamteffekt der Voreinstellung kann dabei bis zu einem Prozent oder mehr im Kompressorwirkungsgrad ausmachen.

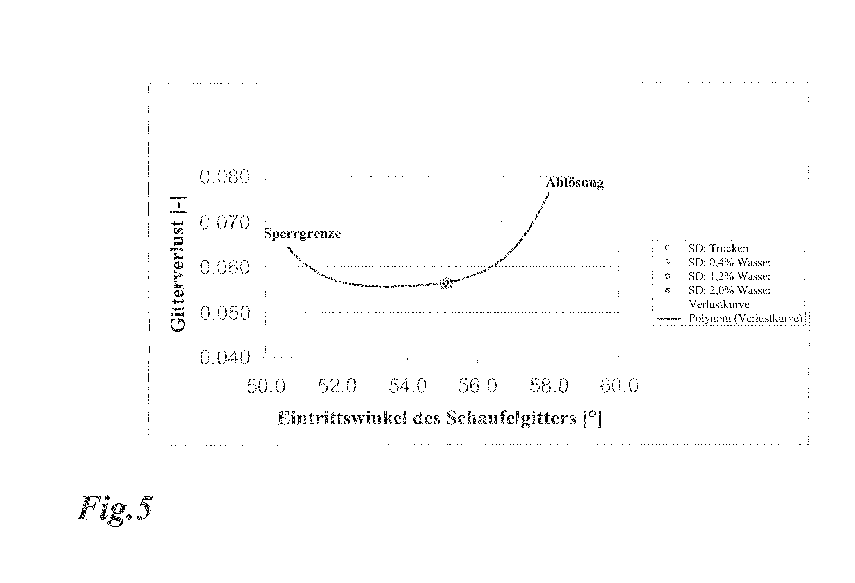

Die im vorderen Bereich des Axialkompressors 10 angeordneten Stufen, bei denen gemäss Fig. 1 und 3 eine Voreinstellung zur "Ablösungs"-Seite hin eingesetzt wird, und die im hinteren Bereich des Axialkompressors 10 angeordneten Stufen, bei denen gemäss Fig. 2 und 4 eine Voreinstellung zur "Sperrgrenzen"-Seite hin eingesetzt wird, sind üblicherweise durch eine mittlere neutrale Stufe voneinander getrennt, in der die Wassereinspritzung gemäss Fig. 5 praktisch keine Verschiebung auf der Verlustkurve und damit auch keine steigenden Verluste verursacht. In dieser Stufe kann auf eine Änderung der Schaufelgeometrie (Voreinstellung) ohne Nachteile verzichtet werden.

### BEZUGSZEICHENLISTE

- 10: Axialkompressor
- 11: Rotor
- 12: Rotorachse
- 13: Stator
- 14: Kompressoreingang
- 15: Kompressorausgang
- ST1,..,ST5: Stufe
- R: Rotorschaufel
- S: Statorschaufel
- α1,α2: Winkel der absoluten Strömungsgeschwindigkeit c
- β1,β2: Winkel der relativen Strömungsgeschwindigkeit w
- c1,c2: absolute Strömungsgeschwindigkeit
- cm1,cm2: axiale Strömungsgeschwindigkeit
- U: lineare Rotorgeschwindigkeit
- w1,w2: Strömungsgeschwindigkeit relativ zur Rotorschaufel

## Patentansprüche

1. Axialkompressor (10), insbesondere für eine Gasturbine, mit einer Mehrzahl von Stufen (ST1,..,ST5), welche zwischen einem Kompressoreingang (14) und einem Kompressorausgang (15) hintereinander angeordnet sind und jeweils wenigstens einen Kranz von Rotorschaufeln (R) und einen Kranz von Statorschaufeln (S) umfassen, **dadurch gekennzeichnet, dass** zur Minimierung der Verluste in den einzelnen Stufen (ST1,..,ST5) bei einem Betrieb des Axialkompressors (10), bei dem Wasser in den Kompressoreingang (14) eingespritzt wird, welches auf dem Weg durch den Kompressor (10) verdampft (sog. "Nasskompression"), die durch das eingespritzte Wasser bedingten Veränderungen in den Strömungsgeschwindigkeiten (c1, cm1, w1) des durch den Kompressor (10) strömenden Mediums durch eine gezielte Änderung der Geometrie der Schaufeln (R, S) weitgehend kompensiert werden.

2. Axialkompressor nach Anspruch 1, **dadurch gekennzeichnet, dass** bei den Stufen, in denen die axiale Strömungsgeschwindigkeit (cm1, cm2) des Mediums durch das Einspritzen des Wassers zunimmt, die Nasen der Schaufeln (R, S) zu einer offeneren Position hin verändert sind, und dass bei den Stufen, in denen die axiale Strömungsgeschwindigkeit (cm1, cm2) des Mediums durch das Einspritzen des Wassers abnimmt, die Nasen der Schaufeln (R, S) zu einer geschlosseneren Position hin verändert sind.

3. Axialkompressor nach Anspruch 2, **dadurch gekennzeichnet, dass** der Axialkompressor (10) eine mittlere Stufe umfasst, in welcher das Einspritzen von Wasser die axiale Strömungsgeschwindigkeit (cm1, cm2) nur unwesentlich beeinflusst, und dass bei den in Strömungsrichtung vor der mittleren Stufe angeordneten Stufen die Nasen der Schaufeln (R, S) zu einer offeneren Position hin verändert sind, und dass bei den in Strömungsrichtung nach der mittleren Stufe angeordneten Stufen die Nasen der Schaufeln (R, S) zu einer geschlosseneren Position hin verändert sind.

4. Axialkompressor nach Anspruch 3, **dadurch gekennzeichnet, dass** bei einer Einspritzung von Wasser in der Grössenordnung von 2% des trockenen Luftmassenstromes am Kompressoreingang (14) die Geometrie der in Strömungsrichtung vor der mittleren Stufe angeordneten Stufen so verändert wird, dass sich der Winkel (β1) der relativen Strömungsgeschwindigkeit (w1) des in die Stufe einströmenden Mediums jeweils um etwa 2° erhöht, und dass die Geometrie der in Strömungsrichtung hinter der mittleren Stufe angeordneten Stufen so verändert wird, dass sich der Winkel (β1) der relativen Strömungsgeschwindigkeit (w1) des in die Stufe einströmenden Mediums jeweils um etwa 2,5° erniedrigt.
